# EUROPÄISCHE PATENTANMELDUNG

(11) **EP 1 197 714 A2**
(43) Veröffentlichungstag der Anmeldung: **17.04.2002**
(21) Anmeldenummer: 01123817.7
(22) Anmeldetag: 05.10.2001
(51) Int. Cl.: F25D 23/06, E04H 5/10, E04B 1/76

(54) **Wandbauelement**

(30) Priorität: 10.10.2000 DE 10050314
(71) Anmelder: Viessmann, Hans, Dr. Dr., 95030 Hof/Saale (DE)
(72) Erfinder: Viessmann, Hans, Dr. Dr., 95030 Hof/Saale (DE)
(74) Vertreter: Wolf, Günter, Dipl.-Ing.

(57) **Zusammenfassung**

Die Erfindung betrifft ein Wandbauelement zur Erstellung von Raumzellen aber auch Wandverkleidungen, bestehend aus innen- und außenwandseitigen, sich parallel zueinander erstreckenden Deckflächen (1,1') aus dünnem Blech, wobei der von den Deckflächen (1,1') begrenzte Hohlraum (2) mit einer Wärmedämmung (3) ausgefüllt ist. Nach der Erfindung ist die zwischen den Deckflächen (1,1') angeordnete Wärmedämmung (3) aus mehreren in Fläche ziegelartig angeordneten Formkörpern (4) gebildet, die jeweils aus feuerfest gebundenen Perlitpartikeln gebildet sind und die untereinander unter Ausbildung von Dehnungsfugen (5) mit den beiden Deckflächen (1,1') feuerfest verklebt sind.

## Beschreibung

Die Erfindung betrifft ein Wandbauelement zur Erstellung von Raumzellen, insbesondere von Kühl-und Frischhaltezellen aber auch Wandverkleidungen, bestehend aus innen-und außenwandseitigen, sich parallel zueinander erstreckenden Deckflächen aus dünnem Blech, wobei der von den Deckflächen begrenzte Hohlraum mit einer Wärmedämmung ausgefüllt ist.
Vorausgeschickt sei, daß unter Wandbauelementen nicht nur solche zur Erstellung von Wänden zu verstehen sind, sondern auch entsprechend formatierte Elemente zur Ausbildung von Decken und/oder Böden solcher Zellen, wobei bzgl. der Verwendung als Bodenelemente diese dann mit Rücksicht auf die erwartbaren Belastungen Zusatzmaßnahmen (bspw.stärkere Bodenbleche und Lastverteilerplatten) bedürfen, die, da an sich bekannt, nicht Gegenstand der vorliegenden Erfindung sind.

Wandbauelemente der eingangs genannten Art, und zwar insbesondere für die Erstellung von Kühl- und Frischhaltezellen, sind hinlänglich bekannt und in Benutzung, so daß es diesbezüglich an sich keines besonderen druckschriftlichen Nachweises bedarf. Nur bspw. sei hierzu verwiesen auf DE-U-9213472. Solche Wandbauelemente kommen aber auch für die Erstellung von Prüfzellen, Mobilfunkstationen, Wetterstationen od.dgl.zur Verwendung. Beim dabei verwendeten wärmedämmenden Material handelt es sich um sogenannten PU-Schaum, der es zuläßt, die Stirn-bzw. Stoßflächen solcher Wandbauelemente nut- und federartig auszubilden. Der Verbund von Deckflächen und PU-Schaum, der in entsprechenden Verschäumungsformen hergestellt wird, verlangt dabei keine mechanische Verbindung der beiden Deckflächen mit einander, da diese Verbindung vom PU-Schaum übernommen wird, in den im übrigen die abgekröpften Ränder der Deckflächen einfach mit eingebunden werden. Solche Wandbauelemente sind nicht nur relativ teuer, sondern haben auch den Nachteil, daß der zwischen den Deckflächen befindliche PU-Schaum brennbar ist, im Brandfall also eine zusätzliche Gefahrenquelle und eine Umweltbelastung darstellt.

Der Erfindung liegt die Aufgabe zugrunde, derartige Wandbauelemente dahingehend umzugestalten und zu verbessern, daß sie zu zumindest vergleichbaren Kosten wie die herkömmlichen Wandelemente herstellbar und anbietbar, insbesondere aber bzgl. ihres Wärmedämmaterials unbrennbar sind, verbunden mit der Maßgabe, daß diese Wärmedämmung dabei zum einen mindestens angenähert die gleiche Wärmedämmung wie solche bei Wandbauelementen der eingangs genannten Art aufweist und daß zum anderen unterschiedlichen Wärmedehnungsverhalten der beteiligten Materialien Rechnung getragen ist.

Diese Aufgabe ist mit einem Wandbauelement der eingangs genannten Art nach der Erfindung dadurch gelöst, daß die zwischen den Deckflächen angeordnete Wärmedämmung aus mehreren in Fläche ziegelartig angeordneten Formkörpern gebildet ist, die jeweils aus feuerfest gebundenen Perlitpartikeln gebildet sind und die untereinander unter Ausbildung von Dehnungsfugen mit den beiden Deckflächen feuerfest verklebt sind.
Vorteilhafte Weiterbildungen und Ausführungsformen ergeben sich nach den abhängigen Patentansprüchen.

Mit dieser erfindungsgemäßen Lösung sind die gestellten Forderungen erfüllt, da Perlit zu weitaus geringeren Kosten als PU zur Verfügung steht und, da es sich bei Perlit bekanntlich um mineralisches Material handelt, liegt eine unbrennbare Wärmedämmung vor, die zudem noch ein geringeres Gewicht als PU-Schaum hat und die, sieht man vom Bindemittel ab, gewissermaßen eine "chemiefreie" Komponente des Wandbauelementes darstellt, und die mit anderen Komponenten des Wandbauelementes, was noch näher erläutert wird, praktisch auch nur auf "mechanischem" Wege (im Gegensatz zum Verschäumen und Aushärten) zu kombinieren ist.
Was dabei die Formkörper betrifft, so sind diese einer einfachen und rationellen Herstellung dahingehend zugänglich, daß das Perlitgranulat mit einer bezogen auf die den Formkörper bildende Gesamtmenge des Perlitgranulates derart geringen Menge von verdünntem, in Form eines Aerosols an die Partikel herangeführten Wasserglas versetzt wird, daß sich unter Reaktion mit CO₂ nur punktuelle, feste Bindungsbrücken zwischen den Perlitpartikeln bilden, wobei CO₂ bis zum Abschluß einer Verdichtung der Partikel in der Herstellungsform auf die Enddimension des Formkörpers zugeführt, danach der Formkörper aus der Form entnommen und der Formkörper vorzugsweise durch Energiezufuhr von innen heraus durch Mikrowellenbeaufschlagung getrocknet wird.
Durch diese Art der Herstellung wird also dafür gesorgt, daß vom Bindemittel Wasserglas nur so wenig wie möglich und soviel wie nötig zur späteren Bindung der Perlitpartikel im Formkörper an diese herangebracht wird, und zwar mit Rücksicht auf den Energie- und auch Zeitaufwand für die notwendige Trocknung. Wesentlich ist dabei auch eine gewisse Verdichtung der per Schüttung in die Form eingebrachten Perlitpartikel, um das in geringer Menge in der Schüttung vorhandene Bindemittel zwischen den Partikeln zur Wirkung zu bringen. Die vorgesehene Zufuhr von CO₂ in Verbindung mit der Verdichtung machen demgegenüber eine praktisch unmittelbare Entnahme der Formkörper aus der Herstellungsform und unmittelbare Überführung in einen Mikrowellentrockner erst möglich, dessen spezielle Anwendung für die Trocknung hier insofern von besonderer Bedeutung ist, als trotz schlechter Wärmeleitung des gebildeten und noch nassen Formkörpers auch das im Kern des Formkörpers anstehende Wasser von der per Mikrowellen eingebrachten Energie unmittelbar erfaßt und ausgetrieben wird.

Die Maßgabe der zu "mehreren ziegelartigen" Anordnung der Formkörper zwischen den Deckflächen nimmt also nicht nur Rücksicht auf das vorerwähnte Dehnungsverhalten sondern auch darauf, daß kleinere Formkörper, hier also bspw. in der Größenordnung von 20x20 bis 50x50 cm² günstiger zu trocknen sind als Formkörper, die in ihrer Größe der Größe der Deckflächen entsprächen, für die Flächengrößen normalerweise in der Grössenordnung von 1,5 bis 2m² in Betracht kommen.

Das erfindungsgemäße Wandbauelement, Weiterbildungen und weitere vorteilhafte Ausführungsformen werden nachfolgend anhand der zeichnerischen Darstellung von Ausführungsbeispielen näher erläutert.

Es zeigt
- Fig. 1: perspektivisch einen Abschnitt eines Wandbauelementes;
- Fig. 2: einen Teilschnitt durch eine besondere Ausführungsform des Wandbauelementes;
- Fig. 3: perspektivisch mehrere Wandbauelemente in möglicher Zuordnungsform;
- Fig. 4: im Schnitt eine besondere Ausführungsform des Stirnflächenbereiches eines Wandbauelementes;
- Fig.5: im Schnitt eine bauliche Einzelheit und
- Fig.6: im Schnitt eine besondere Ausführungsform des Wandbauelementes.

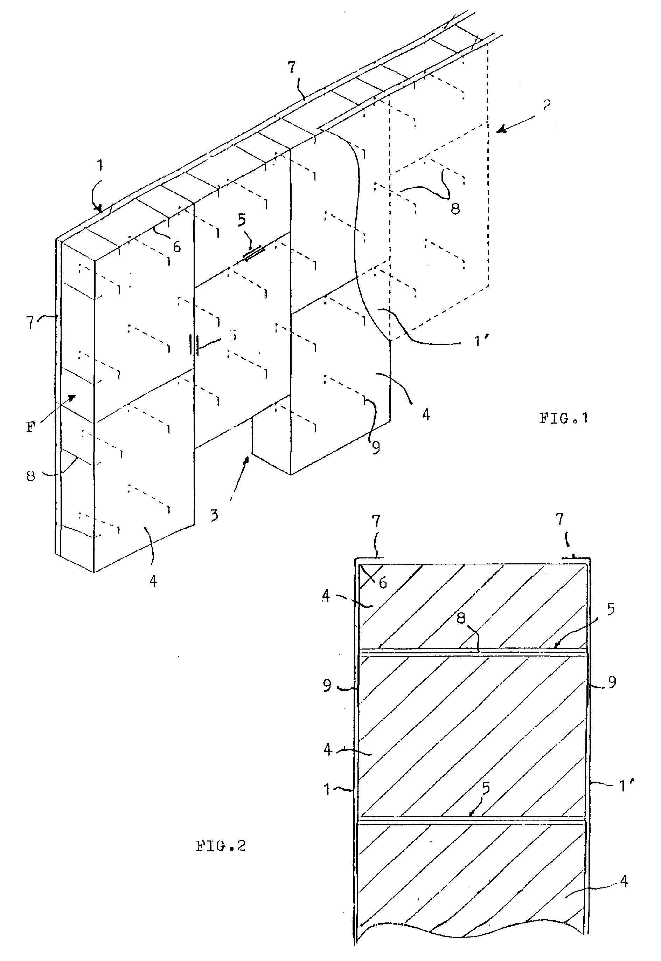

Das Wandbauelement besteht nach wie vor aus innen-und außenwandseitigen, sich parallel zueinander erstreckenden Deckflächen 1,1', wobei der von den Deckflächen 1,1' begrenzte Hohlraum 2 mit einer Wärmedämmung 3 ausgefüllt ist.
Für die erfindungsgemäße Ausbildung eines solchen Wandbauelementes ist nun wesentlich, daß die zwischen den Deckflächen 1,1' angeordnete Wärmedämmung 3 aus mehreren in Fläche ziegelartig angeordneten Formkörpern 4 gebildet ist, die jeweils aus feuerfest gebundenen Perlitpartikeln gebildet sind und die untereinander unter Ausbildung von Dehnungsfugen 5 mit den beiden Deckflächen 1,1' feuerfest verklebt sind.
Die Formkörper haben dabei bspw. eine Stärke in der Größenordnung von 3 bis 10 cm und eine Flächengröße wie einleitend vorerwähnt. Die in Fig.1 dargestellte "ziegelartige" Verlegung der Formkörper 4 zunächst auf der mit einem Feuerfestkleber bestrichenen Innenfläche des einen Deckbleches 1 ist nur beispielhaft zu verstehen, und die nur als Striche in Fig.1 dargestellten Dehnungsfugen 5 haben eine Breite von 0,5 bis 1 mm.
Was dabei die spezielle Formkörperbeschaffenheit betrifft, so hat sich deren Ausbildung dahingehend als vorteilhaft erwiesen, daß die Formkörper 4 aus in einer Form verdichteten Perlitpartikeln gebildet sind, deren Einzelpartikel durch lediglich punktuell zwischen den Partikeln vorhandenes, mit CO₂ zur Reaktion gebrachtes Wasserglas verbunden sind, und daß die die Formkörper 4 bildenden Partikel in Bezug auf ihr Schüttvolumen bspw. in einer Größenordnung von 20 bis 30 % in einer dafür geeigneten Form verdichtet und die Partikel in den Formkörpern 4 mit einer Körnung in der Größenordnung von maximal 6 mm enthalten sind.

Vorbehaltlich einer speziellen, noch näher zu erläuternden Ausführungsform sind die Deckflächen 1,1' vorteilhaft rings um die Kanten 6 der Stirnflächen F der Wärmedämmung 3 mit umgekröpften Rändern 7 versehen.

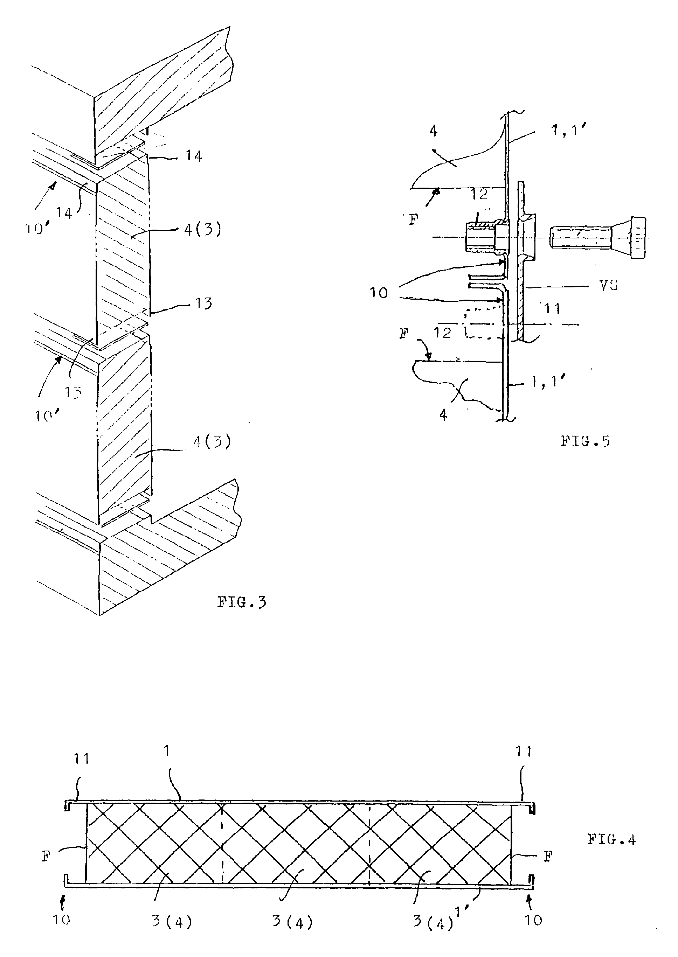

Mit Rücksicht auf die "innere Stabilität" bzw. Verbundfestigkeit eines solchen Wandelementes bei Biegebeanspruchung, die beim Tragen relativ großflächiger Elemente (bspw. 1,5 bis 2 m²) auftreten kann, sind vorteilhaft zwischen den Deckflächen 1,1' Zuganker 8 aus bspw. 0,6 mm dicken Draht angeordnet, die sich in den Dehnungsfugen 5 (siehe Fig.2) erstrecken und die mit abgeknickten Enden 9 in die Verklebung zwischen den Deckflächen 1,1' und den Formkörpern 4 eingebunden sind. Diese Zuganker 5 können bspw. schon an den Formkörpern 4 angeordnet sein, so daß sie bei deren Verlegung automatisch mit in den Gesamtverund integriert werden. Die Fixierung solcher Zuganker 5 an den Formstücken 4 kann bspw. durch Wasserglas erfolgen, mit dem die Formstücke 4 aus Gründen der Erhöhung ihrer Oberflächenfestigkeit nach ihrer Entnahme aus der Herstellungsform besprüht werden können. Abgesehen von der Anordnung der Zuganker 8 an den Schmalseiten der Formstücke 4, wodurch diese sich dann automatisch in den Fugen 5 erstrecken, ist es aber auch möglich, wie dies auch in Fig.1 dargestellt ist, die Formstücke 4 mit Löchern zu versehen und die die Zuganker 8 bildenden Drähte einfach durchzustecken und beidendig abzuknicken.

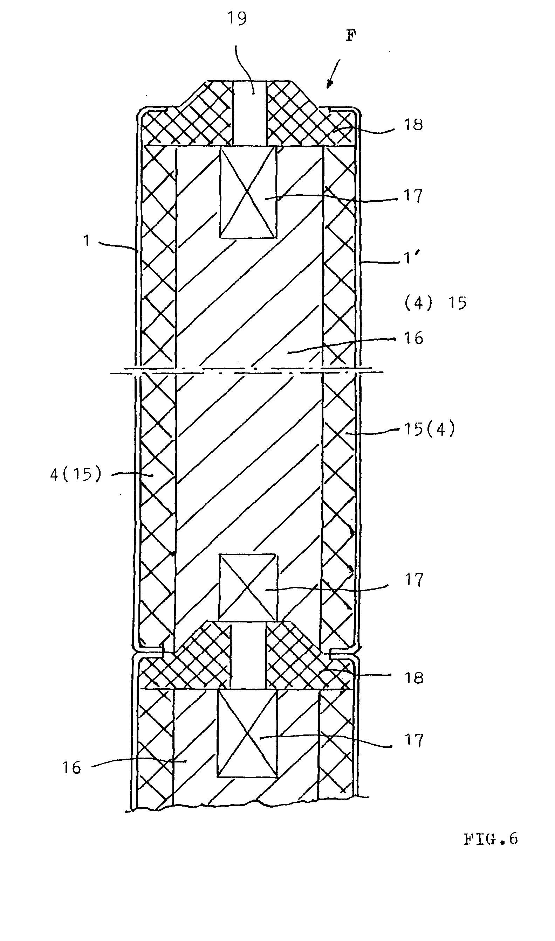

Aus Gründen der Verbindbarkeit solcher Wandelemente untereinander sind zweckmäßig die Deckflächen 1,1' an zwei gegenüberliegenden Randbereichen 10 (siehe Fig.4) die betreffenden Stirnflächen F der Wärmedämmung 3 überragend ausgebildet und im Überstandsrand 11 mit Verschraubungsaufnahmen 12 versehen, wie dies in Fig.5. verdeutlicht ist. Mit Hilfe von Verbindungsstreifen VS, wie in Fig.5 bspw. mit dargestellt, können dadurch zwei Wandelemente miteinander verbunden werden.

Der Überstand 11 macht es dabei vorteilhaft entbehrlich, in den Formkörpers 4 selbst entsprechende Ausnehmungen für die Einlassung der Verschraubungsaufnahmen 12 vorsehen zu müssen.

Mit Rücksicht auf eine Zusammenfügbarkeit von Wandbauelementen im Sinne der Darstellung gemäß Fig.3 sind ferner die Deckflächen 1,1' an den beiden anderen sich gegenüberliegenden Randbereichen 10' einerseits mit überstehenden Rändern 13 und andererseits mit zwischen diese Ränder 13 passenden Einkröpfungen 14 versehen. Dadurch können die Wandelemente einfach zusammengesteckt werden, wobei ein ganzer Wandverbund dann seine Stabilität durch die vorerwähnten und verschraubbaren Verbindungsstreifen VS erhält.

Eine weitere besondere Ausführungsform ist in Fig.6 im Schnitt dargestellt, gemäß der die Wärmedämmung 3 aus zwei jeweils mit den Deckflächen 1,1' verklebten, feuerfesten Formkörperlagen 15 gebildet und zwischen den beiden Lagen 15 eine weitere Lage 16 aus PU-Schaum angeordnet ist.

Diese Ausführungsform trägt zwei besonderen Aspekten Rechnung: Zum einen können in die aus Perlit gebildeten Formkörper 4 keine sogenannten Spannschlösser eingebunden werden, wie sie bei herkömmlichen Wandelementen mit einer Wärmedämmung 3 aus PU-Schaum üblich sind, da die Spannschloßteile unter Belastung aus den Formkörpern 4 ausbrechen würden. Zum anderen kommen solche Wandelemente auch für die Erstellung von sogenannten Testzellen zum Einsatz, in denen Testgegenstände hohen Temperaturen ausgesetzt werden. PU-Schaum ist aber solchen Temperaturen nicht gewachsen, d.h., PU-Schaum verliert spätestens ab 80°C seine Stabilität und wird pastös.
Mit der Ausführungsform nach Fig.6 ist also die Möglichkeit geschaffen, einerseits Spannschlösser 17 in die Lage 16 aus PU-Schaum einbinden zu können, wobei aber die Lagen 15 aus den Formkörpern 4 zu hohe Temperaturbelastungen vom PU-Schaumkern fernhalten. Bei einer solchen Sandwichbauweise der Wärmedämmung 3 sind die Dickenbemessungen der Lagen 15 und 16 so bemessen, daß derartige Wandelemente bzgl. ihrer Wandstärke im Rahmen vorerwähnt üblicher Abmessungen bleiben.
In diesem Zusammenhang besteht eine ebenfalls in Fig.6 mit dargestellte Ausführungsform darin, daß die weitere Lage 16 aus PU-Schaum mindestens auf einer Anschlußstirnseite zur Stirnflächen F hin mit Deckprofilleisten 18 aus dem gleichen Material wie die Formkörper 4 abgedeckt ist, wobei in den Deckprofilleisten 18 Durchgriffsschlitze 19 im Bereich der Spannschloßanordnungen angeordnet sind. Da die Verbindung bei solchen Wandbauelementen mit Spannschlössern 17 bekannter Art und in bekannter Weise erfolgen kann, sind auch die jeweiligen Anschlußstirnflächen, wie bspw. dargestellt, in herkömmlicher Weise mit Nut- und Federausbildungen versehen.

## Patentansprüche

1. Wandbauelement zur Erstellung von Raumzellen aber auch Wandverkleidungen, bestehend aus innen-und außenwandseitigen, sich parallel zueinander erstreckenden Deckflächen (1,1') aus dünnem Blech, wobei der von den Deckflächen (1,1') begrenzte Hohlraum (2) mit einer Wärmedämmung (3) ausgefüllt ist,
**dadurch gekennzeichnet,**
**daß** die zwischen den Deckflächen (1,1') angeordnete Wärmedämmung (3) aus mehreren in Fläche ziegelartig angeordneten Formkörpern (4) gebildet ist, die jeweils aus feuerfest gebundenen Perlitpartikeln gebildet sind und die untereinander unter Ausbildung von Dehnungsfugen (5) mit den beiden Deckflächen (1,1') feuerfest verklebt sind.

2. Wandbauelemet nach Anspruch 1,
**dadurch gekennzeichnet,**
**daß** die Formkörper (4) aus in einer Form verdichteten Perlitpartikeln gebildet sind, deren Einzelpartikel durch lediglich punktuell zwischen den Partikeln vorhandenes, mit CO₂ zur Reaktion gebrachtes Wasserglas verbunden sind.

3. Wandbauelement nach Anspruch 1 oder 2,
**dadurch gekennzeichnet,**
**daß** die die Formkörper (4) bildenden Partikel in Bezug auf ihr Schüttvolumen in einer Größenordnung von 15 bis 45 % verdichtet und die Partikel in den Formkörpern (4) mit einer Körnung in der Größenordnung von maximal 6 mm enthalten sind.

4. Wandbauelement nach nach einem der Ansprüch 1 bis 3,
**dadurch gekennzeichnet,**
**daß** die Deckflächen (1,1') rings um die Kanten (6) der Stirnflächen (F) der Wärmedämmung (3) mit umgekröpften Rändern (7) versehen sind.

5. Wandbauelement nach einem der Ansprüche 1 bis 4,
**dadurch gekennzeichnet,**
**daß** zwischen den Deckflächen (1,1') Zuganker (8), wie Zuganker aus Draht oder Glasfasersträngen, angeordnet sind, die sich in den Dehnungsfugen (5) und/oder Löchern der Formstücke erstrekken und die mit abgeknickten Enden (9) in die Verklebung zwischen den Deckflächen (1,1') und den Formkörpern (4) eingebunden sind.

6. Wandbauelement nach einem der Ansprüche 1 bis 5,
**dadurch gekennzeichnet,**
**daß** die Deckflächen (1,1') an zwei gegenüberliegenden Randbereichen (10) die betreffenden Stirnflächen (F) der Wärmedämmung (3) überragen und im Überstandsrand (11) mit Verschraubungsaufnahmen (12) versehen sind.

7. Wandbauelemet nach Anspruch 6,
**dadurch gekennzeichnet,**
**daß** die Deckflächen (1,1') an den beiden anderen sich gegenüberliegenden Randbereichen (10') einerseits mit überstehenden Rändern (13) und andererseits mit zwischen diese Ränder (13) passenden Einkröpfungen (14) versehen sind.

8. Wandbauelement nach einem der Ansprüche 1 bis 5,
**dadurch gekennzeichnet,**
**daß** die Wärmedämmung (3) aus zwei jeweils mit den Deckflächen (1,1') verklebten Lagen (15) aus Perlith gebildet und zwischen den beiden Lagen (15) eine weitere Lage (16) aus PU-Schaum angeordnet ist, in der Spannschlösser (17) eingebunden sind.

9. Wandbauelement nach Anspruch 8,
**dadurch gekennzeichnet,**
**daß** die weitere Lage (16) aus PU-Schaum mindestens einseitig zur Stirnflächen (F) hin mit Deckprofilleisten (18) aus dem gleichen Material wie die Formkörper (4) abgedeckt ist, wobei in den Deckprofilleisten (18) Durchgriffsschlitze (19) im Bereich der Spannschloßanordnungen angeordnet sind.
